# EUROPÄISCHE PATENTSCHRIFT

(11) **EP 2 282 632 B1**
(45) Veröffentlichungstag und Bekanntmachung des Hinweises auf die Patenterteilung: **05.05.2021**
(21) Anmeldenummer: 09749599.8
(22) Anmeldetag: 19.05.2009
(51) Int. Cl.: A01N 53/00, C08F 251/02, A01N 25/04, A01N 53/08, C08F 257/00, A01P 7/04

(54) **INSEKTIZIDE FORMULIERUNGEN MIT VERBESSERTER LANGZEITWIRKUNG AUF OBERFLÄCHEN**
Insecticidal formulations with improved long-term effect on surfaces
Formules insecticides ayant une meilleure efficacité longue durée sur des surfaces

(30) Priorität: 21.05.2008 EP 08156623; 16.06.2008 EP 08158297; 24.04.2009 US 172265 P
(43) Veröffentlichungstag der Anmeldung: 16.02.2011
(60) Teilanmeldung: 10191695.5
(73) Patentinhaber: Bayer CropScience Aktiengesellschaft, 40789 Monheim (DE)
(72) Erfinder: KIJLSTRA, Johan, 51519 Odenthal (DE); ROSENFELDT, Frank, 40764 Langenfeld (DE); NENTWIG, Guenther, 51381 Leverkusen (DE); GUTSMANN, Volker, 40764 Langenfeld (DE); SONNECK, Rainer, 51375 Leverkusen (DE); ROSS, Douglas, Overland Park, KS 66223 (US)
(74) Vertreter: BIP Patents
(86) Internationale Anmeldenummer: PCT/EP2009/003546
(87) Internationale Veröffentlichungsnummer: WO 2009/141109

(56) Entgegenhaltungen:
- EP-A- 1 230 855
- WO-A-2006/015791
- WO-A-2006/094792
- WO-A-2007/081961
- US-A- 3 400 093
- US-A1- 2006 003 014
- US-A1- 2007 184 983

## Beschreibung

Die vorliegende Erfindung betrifft Zusammensetzungen zur Schädlingsbekämpfung, insbesondere insektizide Suspensionskonzentrate und aus ihnen hergestellte Sprühlösungen, ein Verfahren zu deren Herstellung, und die Verwendung solcher Formulierungen zur lang anhaltenden Bekämpfung tierischer Schädlinge (Arthropoden) auf verschiedenen Oberflächen. Weiterhin betrifft die vorliegende Erfindung die Verwendung bestimmter Polymerdispersionen in Schädlingsbekämpfungsmitteln, insbesondere ihre Verwendung zur Verlängerung der Langzeitwirkung dieser Mittel, wenn sie auf Oberflächen aufgebracht werden. Weiterhin betrifft die vorliegende Erfindung die Verwendung der erfindungsgemäßen Zusammensetzungen zur Bekämpfung von Parasiten, inbesondere Ektoparasiten, bei Tieren.

Die Bekämpfung von Arthropoden innerhalb und außerhalb von Gebäuden und Häusern ist aus verschiedenen Gründen notwendig. In Ländern, in denen Krankheiten von Arthropoden wie Insekten oder Spinnentieren auf Tiere und Menschen übertragen werden, z.B. Malaria. besteht ein starker Bedarf, die Bewohner wirksam und langfristig zu schützen. Darüber hinaus soll aus hygienischen und bautechnischen Gründen verhindert werden, dass tierische Schädlinge in Gebäude eindringen, sich in Gebäuden ausbreiten und aufhalten sowie Holz oder andere Materialien befallen. Aus diesem Grund wurde bereits eine Vielzahl von Bekämpfungsmitteln und -verfahren entwickelt. Die häufigste Bekämpfungsmethode ist das Ausbringen von insektiziden Wirkstoffen in wässrigen Spritz- oder Sprühlösungen. Unabhängig von dem verwendeten Wirkstoff ist die Wirksamkeit des Sprühbelags dabei auch stark abhängig von den chemischphysikalischen Eigenschaften der besprühten Oberfläche Die Wirkungsdauer des Sprühbelags wird besonders auf porösen und insbesondere alkalischen, porösen Oberflächen wie Beton, Putz, Mauerstein, Holz (behandelt und unbehandelt), Keramik, Stroh bzw. Reet, kreidehaltigen, kalkhaltigen, gipshaltigen, zementhaltigen und lehmhaltigen Oberflächen stark beeinträchtigt und verringert. Dies führt z.B. bei der Bekämpfung von Malariamücken innerhalb von Gebäuden zu kurzen Dauerwirkungen von maximal 6 Monaten.

Bei der Schädlingsbekämpfung im Außenbereich des Hauses werden die Hauswände, der Erdboden, Pflanzen und Rasenflächen behandelt. Hier führt neben den Oberflächeneigenschaften (Porosität, pH-Wert) zusätzlich der Temperatur-, UV- und Regeneinfluss dazu, dass die eingesetzten Wirkstoffe ihre Wirksamkeit schnell verlieren.

Aus dem Stand der Technik ist US2006/003014 A1 bekannt. Es offenbart Mikrokapsel-Suspensionen, bei denen ein insektizider Wirkstoff in einer Kapsel vorliegt, wobei der Wirkstoff in der wässrigen Phase suspendiert ist. Diese Mikrokapsel-Suspensionen beinhalten ein Einkapselungsmittel, welches aus einem Pfropfcopolymer und einem Vinylmonomer gebildet wird. WO2006/094792 A betrifft wässrige Insektizid-Zusammensetzungen in Form einer wässrigen Dispersion feinteiliger, wenigstens einen insektiziden organischen Wirkstoff einer bestimmten Wasserlöslichkeit enthaltender Polymerpartikel einer bestimmten mittleren Teilchengröße, wobei die den wenigstens einen insektiziden Wirkstoff enthaltenden Polymerpartikel eine kationische Oberflächenladung aufweisen und die wässrige Dispersion der wirkstoffhaltigen Polymerpartikel erhältlich ist durch radikalische wässrige Emulsionspolymerisation einer Monomerzusammensetzung ethylenisch ungesättigter Monomere, worin die ethylenisch ungesättigten Monomere den wenigstens einen insektiziden Wirkstoff in gelöster Form enthalten. Es besteht andauernder Bedarf, die Wirksamkeit der Produkte unter diesen Bedingungen zu verbessern. Durch einen länger anhaltenden Schutz kann die Exposition des Anwenders, der Bewohner, der Haustiere und der Umwelt minimiert werden, weil weniger häufig Wirkstoff ausgebracht werden muss.

Die der vorliegenden Erfindung zugrunde liegende Aufgabe war daher die Bereitstellung neuer, verbesserter insektizider Zusammensetzungen, die langanhaltenden Schutz vor Insekten bieten, wenn sie auf Oberflächen appliziert werden. Sie sollen sich insbesondere für poröse und/oder alkalische Oberflächen eignen und gegenüber Umwelteinflüssen wie hohen/tiefen/wechselnden Temperaturen, UV-Strahlung und Regen resistent sein. Gemäß einem weiteren Aspekt umfasst die Aufgabe auch die Bereitstellung verbesserter Zubereitungen zur Bekämpfung von Parasiten bei Tieren.

Diese Aufgabe wird durch die erfindungsgemäßen wässrigen Suspensionskonzentrate bzw. aus ihnen hergestellte Spritzbrühen gelöst, die generell eine Reihe vorteilhafter Eigenschaften aufweisen. So sind die erfindungsgemäßen wässrigen Suspensionskonzentrate lösungsmittelfrei. Sie sind außerdem einfach in der Handhabung und Herstellung. Sie sind bei der Verdünnung auf die Anwendungskonzentration in Wasser gut redispergierbar und weisen in der Spritzbrühe nur eine sehr geringe Sedimentation der Spritzbrühe auf. Erfindungsgemäß einsetzbare Spritzbrühen können durch Verdünnen eines Konzentrats in Wasser hergestellt werden oder durch Mischen verschiedener Vorlösungen direkt vor dem Sprühen (Tank-Mix-Anwendung). Die erfindungsgemäßen wässrigen Suspensionskonzentrate können auch Fertigformulierungen (RTU = ready-to-use) sein.

Die erfindungsgemäßen wässrigen Suspensionskonzentrate enthalten
- mindestens ein Insektizid,
- ein nicht-ionisches und/oder ein ionisches Dispergierhilfsmittel,
- eine wässrige Polymerdispersion,
   wobei die Polymerdispersion durch Polymerisation in Gegenwart eines Hydrokolloids als Propfgrundlage hergestellt wird,
   wobei die Polymerdispersion durch radikalisch initiierte Emulsionscopolymerisation von ethylenisch ungesättigten Monomeren in Gegenwart von Stärke erhältlich ist, dadurch gekennzeichnet, dass als ethylenisch ungesättigte Monomere
   (a) 30 bis 60 Gew.-% mindestens eines gegebenenfalls substituierten Styrols,
   (b) 60 bis 30 Gew.-% mindestens eines (Meth)acrylsäure-C₁-C₄-Alkylesters,
   (c) 0 bis 10 Gew.-% an anderen ethylenisch ungesättigten copolymerisierbaren Monomeren,
      als Stärke (d) 10 bis 40 Gew.-% abgebaute Stärke mit einem Molgewicht Mₙ = 500 bis 10 000, wobei die Summe (a) + (b) + (c) + (d) 100% beträgt,
      und als Radikalstarter für die radikalisch initiierte Emulsionspolymerisation ein pfropfaktives, wasserlösliches Redoxsystem eingesetzt wird.

Es wurde überraschend gefunden, dass die erfindungsgemäßen wässrigen Suspensionskonzentrate nach dem Aufbringen auf eine Oberfläche eine verbesserte biologische Langzeitwirkung im Vergleich zum Stand der Technik aufweisen. Dies gilt insbesondere bei der Behandlung von porösen und insbesondere alkalischen, porösen Oberflächen wie Beton, Putz, Mauerstein, Holz (behandelt und unbehandelt), Keramik, Stroh bzw. Reet, kreidehaltigen, kalkhaltigen, gipshaltigen, zementhaltigen und lehmhaltigen Oberflächen. Dabei bleibt die Wirkung bei Anwendung auf nicht-porösen Oberflächen im Wesentlichen unbeeinflusst. Dies ist überraschend, denn wendet man eine polymerhaltige Formulierung, die für poröse Oberflächen geeignet ist, auf nicht-porösen Oberflächen an, kommt es dabei meist zu einer in-situ Verkapselung des Wirkstoffs, was die biologische Wirkung drastisch reduziert.

Weiterhin wurde überraschend gefunden, dass die Haltbarkeit der durch Anwendung der erfindungsgemäßen wässrigen Suspensionskonzentrate erhaltenen Sprühbeläge auch unter dem Einfluss von hohen/tiefen/wechselnden Temperaturen, Regen und UV-Bestrahlung deutlich besser ist als die von vorbekannten Beschichtungen.

Es wurde weiterhin überraschend gefunden, dass die erfindungsgemäßen wässrigen Suspensionskonzentrate sich in der Anwendung als vorteilhaft erwiesen haben. So kommt es seltener als bei vorbekannten Formulierungen zum Verstopfen von Düsen in den zum Versprühen benutzten Geräten. Aufgrund der Wasserlöslichkeit sind die zur Aufbringung der erfindungsgemäßen wässrigen Suspensionskonzentrate genutzten Geräte selbst nach dem Eintrocknen von Produktresten besonders leicht zu reinigen.

Die erfindungsgemäßen wässrigen Suspensionskonzentrate enthalten bevorzugt
- mindestens ein Insektizid ausgewählt aus Pyrethroiden, Pyrazolen, Neonikotinoiden, Diamiden (Anthranilamide, Benzoldicarboxamide), Carbamaten, METI (mitochondriale Energietransfer Inihibitoren (complex I - III der Atmungskette), botanischen Insektiziden und anorganischen Insektiziden.

Die erfindungsgemäßen wässrigen Suspensionskonzentrate enthalten besonders bevorzugt
- mindestens ein Insektizid ausgewählt aus Beta-Cyfluthrin, Cyfluthrin, Cypermethrin, Alpha-Cypermethrin, Deltamethrin, Bifenthrin, Flumethrin, Permethrin, Lambda-Cyhalothrin, Gamma-Cyhalothrin, Metofluthrin, Etofenprox, Transfluthrin, Pyrethrum, Indoxacarb, Carbaryl, Fipronil, Metaflumizone, Azadirachtin, Flubendiamide, Chloranthraniliprole, Borsäure, Borax, Imidacloprid, Clothianidin, Dinotefuran und Acetamiprid, Fenpyroximate und Tolfenpyrad, Spinosad.

Neben den oben aufgeführten Insektiziden können die erfindungsgemäßen wässrigen Suspensionskonzentrate weitere insektizide Wirkstoffe enthalten, z.B. ausgewählt aus

Alanycarb, Aldicarb, Aldoxycarb, Allyxycarb, Aminocarb, Bendiocarb, Benfuracarb, Bufencarb, Butacarb, Butocarboxim, Butoxycarboxim, Carbofuran, Carbosulfan, Cloethocarb, Dimetilan, Ethiofencarb, Fenobucarb, Fenothiocarb, Formetanate, Furathiocarb, Isoprocarb, Metam-sodium, Methiocarb, Methomyl, Metolcarb, Oxamyl, Pirimicarb, Promecarb, Propoxur, Thiodicarb, Thiofanox, Trimethacarb, XMC, Xylylcarb, Triazamate, Acephate, Azamethiphos, Azinphos (-methyl, -ethyl), Bromophos-ethyl, Bromfenvinfos (-methyl), Butathiofos, Cadusafos, Carbophenothion, Chlorethoxyfos, Chlorfenvinphos, Chlormephos, Chlorpyrifos(-methyl/-ethyl), Coumaphos, Cyanofenphos, Cyanophos, Chlorfenvinphos, Demeton-S-methyl, Demeton-S-methylsulphon, Dialifos, Diazinon, Dichlofenthion, Dichlorvos/DDVP, Dicrotophos, Dimethoate, Dimethylvinphos, Dioxabenzofos, Disulfoton, EPN, Ethion, Ethoprophos, Etrimfos, Famphur, Fenamiphos, Fenitrothion, Fensulfothion, Fenthion, Flupyrazofos, Fonofos, Formothion, Fosmethilan, Fosthiazate, Heptenophos, Iodofenphos, Iprobenfos, Isazofos, Isofenphos, Isopropyl O-salicylate, Isoxathion, Malathion, Mecarbam, Methacrifos, Methamidophos, Methidathion, Mevinphos, Monocrotophos, Naled, Omethoate, Oxydemeton-methyl, Parathion (-methyl/ -ethyl), Phenthoate, Phorate, Phosalone, Phosmet, Phosphamidon, Phosphocarb, Phoxim, Pirimiphos (-methyl/-ethyl), Profenofos, Propaphos, Propetamphos, Prothiofos, Prothoate, Pyraclofos, Pyridaphenthion, Pyridathion, Quinalphos, Sebufos, Sulfotep, Sulprofos, Tebupirimfos, Temephos, Terbufos, Tetrachlorvinphos, Thiometon, Triazophos, Triclorfon, Vamidothion, DDT, Nitenpyram, Nithiazine, Thiacloprid, Thiamethoxam, Nicotine, Bensultap, Cartap, Spinosad, Camphechlor, Chlordane, Endosulfan, Gamma-HCH, HCH, Heptachlor, Lindane, Methoxychlor, Acetoprole, Ethiprole, Pyrafluprole, Pyriprole, Vaniliprole, Avermectin, Emamectin, Emamectin-benzoate, Ivermectin, Milbemycin, Diofenolan, Epofenonane, Fenoxycarb, Hydroprene, Kinoprene, Methoprene, Pyriproxifen, Triprene, Chromafenozide, Halofenozide, Methoxyfenozide, Tebufenozide, Bistrifluron, Chlofluazuron, Diflubenzuron, Fluazuron, Flucycloxuron, Flufenoxuron, Hexaflumuron, Lufenuron, Novaluron, Noviflumuron, Penfluron, Teflubenzuron, Triflumuron, Buprofezin, Cyromazine, Diafenthiuron, Azocyclotin, Cyhexatin, Fenbutatin-oxide, Chlorfenapyr, Binapacyrl, Dinobuton, Dinocap, DNOC, Fenazaquin, Fenpyroximate, Pyrimidifen, Pyridaben, Tebufenpyrad, Tolfenpyrad, Hydramethylnon, Dicofol, Rotenone, Acequinocyl, Fluacrypyrim, Bacillus thuringiensis-Stämme, Spirodiclofen, Spiromesifen, Spirotetramat, 3-(2,5-Dimethylphenyl)-8-methoxy-2-oxo-1-azaspiro[4.5]dec-3-en-4-yl ethyl carbonate (alias: Carbonic acid, 3-(2,5-dimethylphenyl)-8-methoxy-2-oxo-1-azaspiro[4.5]dec-3-en-4-yl ethyl ester, CAS-Reg.-No.: 382608-10-8), Flonicamid, Amitraz, Propargite, Thiocyclam hydrogen oxalate, Thiosultap-sodium, Azadirachtin, Bacillus spec., Beauveria spec., Codlemone, Metarrhizium spec., Paecilomyces spec., Thuringiensin, Verticillium spec., Aluminium phosphid, Methylbromide, Sulfurylfluorid, Cryolite, Flonicamid, Pymetrozine, Clofentezine, Etoxazole, Hexythiazox, Amidoflumet, Benclothiaz, Benzoximate, Bifenazate, Bromopropylate, Buprofezin, Chinomethionat, Chlordimeform, Chlorobenzilate, Chloropicrin, Clothiazoben, Cycloprene, Cyflumetofen, Dicyclanil, Fenoxacrim, Fentrifanil, Flubenzimine, Flufenerim, Flutenzin, Gossyplure, Hydramethylnone, Japonilure, Metoxadiazone, Petroleum, Piperonylbutoxid, Kaliumoleat, Pyridalyl, Sulfluramid, Tetradifon, Tetrasul, Triarathene und Verbutin.

Bevorzugt sind die erfindungsgemäßen wässrigen Suspensionskonzentrate mit mehr als einem insektiziden Wirkstoff
- Beta-Cyfluthrin und Imidacloprid.

Die erfindungsgemäßen wässrigen Suspensionskonzentrate enthalten eine wässrige anionische, kationische oder amphotere Polymerdispersion.

Als Polymerdispersionen kommen bevorzugt feinteilige Polymerdispersionen in Betracht, die in einer Konzentration von 0,025 Gew.-% bezogen auf den Feststoffgehalt in demineralisiertem

Wasser eine Extinktion, gemessen in einer 1 cm Küvette bei 535 nm, kleiner 2,0, bevorzugt kleiner 1,0 und besonders bevorzugt kleiner 0,1 aufweist.

Bevorzugt sind Polymerdispersionen, die nach Eintrocknung eine Glastemperatur von 0°C bis 120°C, bevorzugt von 25°C bis 90°C und besonders bevorzugt von 40°C bis 80°C aufweisen.

Die Glastemperatur der Polymere wurde wie folgt bestimmt: Im DSC-Tiegel eingetrocknete Polymerdispersion (Trocknung 24 Stunden bei Raumtemperatur und 0% relativer Feuchte) wurde mit dem dynamischen Differenz-Kalorimeter DSC-7 mit Intracooler der Fa. Perkin-Elmer über drei Aufheiz/Kühl-Zyklen (-100°C bis +150°C, Heizrate 20K/min, Kühlrate 320K/min, StickstoffSpülung mit 30 ml/min Gasfluss) bestimmt. Die Auswertung der Glastemperatur erfolgt bei halber Höhe der Glasstufe.

Die Mindestfilmbildetemperatur (MFT) wurde mit dem Temperaturgradienten-Prüfgerät Thermostair ® (Coesfeld Messtechnik GmbH) nach DIN ISO 2115 bestimmt.

Zur Bestimmung der Elektrolytstabilität der Polymerdispersionen wurde die Extinktionsmessung wie oben parallel nach Verdünnen in Wasser und in einer CaCl₂-Dispersion (50 mM) durchgeführt. Die Messung wurde 24 Stunden nach Ansetzen der Verdünnung durchgeführt. Die relative Differenz beider Extinktionswerte (Wasser zu CaCl₂-Lösung) ist ein Maß für die Elektrolytstabilität. Polymerdispersionen mit guter Elektrolytstabilität weisen eine relative Extinktions-Differenz von weniger als 20%, bevorzugt weniger als 5% und besonders bevorzugt weniger als 3% auf.

Bevorzugt sind Polymerdispersionen, die erhältlich sind durch Polymerisation eines Monomerengemisches enthaltend ein gegebenenfalls substituiertes Styrol und einen (Meth)acrylsäure-C₁-C₄-Alkylester.

Als substituierte Styrole werden bevorzugt α-Methylstyrol, Vinyltoluol oder deren Mischung eingesetzt.

Hydrokolloide sind makromolekulare, hydrophile Substanzen, die in Wasser löslich oder dispergierbar und quellfähig sind und dabei viskose Lösungen, Gele oder stabilisierte Systeme bilden, wie beispielsweise Agar, Carrageenan, Xanthan, Gellan, Galactomannane, Gummi Arabicum, Tragacanth, Karaya, Curdlan, beta Glucan, Alginate, Mannane, Chitosan, Cellulosen, Proteine, Gelatine, Pektine, Stärke, und deren modifizierten und/oder abgebauten (beispielsweise hydrolysierten und/oder oxidierten) Formen sowie synthetische wasser-lösliche Polymere. Erfindungsgemäß wird Stärke als Hydrokolloid verwendet, bevorzugt abgebaute Stärke.

Zur Herstellung der radikalisch initiierten Emulsionscopolymerisation werden als Monomere der Gruppe a) Styrol und/oder substituierte Styrole wie beispielsweise α-Methylstyrol oder Vinyltoluol eingesetzt. Besonders bevorzugt wird unsubstituiertes Styrol eingesetzt.

Die gepfropften Polymerdispersionen weisen eine Teilchengröße von unter 100 nm, bevorzugt 50 bis 90 nm auf.

Die Verwendung der wässrigen Polymerdispersionen in Schädlingsbekämpfungsmitteln ist ebenfalls Gegenstand der vorliegenden Erfindung. Ihre Verwendung erfolgt dabei wie in der vorliegenden Anmeldung beschrieben und durch Beispiele belegt ist.

Die erfindungsgemäßen wässrigen Suspensionskonzentrate enthalten nicht-ionische und/oder ionische Dispergierhilfsmittel.

Als nicht-ionische Tenside kommen Polyethylenoxid-polypropylenoxid-Blockcopolymere, Polyethylenglykolether von linearen Alkoholen, Umsetzungsprodukte von Fettsäuren mit Ethylenoxid und/oder Propylenoxid, ferner Polyvinylalkohol, Polyvinylpyrrolidon, Mischpolymerisate aus Polyvinylalkohol und Polyvinylpyrrolidon sowie Copolymerisate aus (Meth)acrylsäure und (Meth)acrylsäureestern, weiterhin Alkylethoxylate und Alkylarylethoxylate, die gegebenenfalls phosphatiert und gegebenenfalls mit Basen neutralisiert sein können, wobei Sorbitolethoxylate beispielhaft genannt seien, in Betracht.

Als ionische Dispergierhilfsmittel werden bevorzugt anionische Dispergierhilfsmittel eingesetzt, modifizierte Natrium-Ligninsulfonate, Kraft-Natriumligninsulfonate, Naphtalin-Formaldehyd-Kondensate, Polyasparaginsäure, Polyacrylate, Polyethylensulfonate, modifizierte Stärke, Gelatine, Gelatinederivate oder anionische Tenside (wie z.B. aromatische oder aliphatische Sulfate und Sulfonate bzw. sulfatierte oder sulfonierte aromatische oder aliphatische Ethoxylate).

Bei feinteiligen Wirkstoffpartikeln bzw. wirkstoffhaltigen Trägerpartikeln werden besonders bevorzugt anionische und/oder nicht-ionische Dispergierhilfsmittel verwendet.

Neben den oben aufgeführten Komponenten enthalten die erfindungsgemäßen wässrigen Suspensionskonzentrate gegebenenfalls
- einen Verdicker (ggf. inkl. Verdickungsaktivator),
- ein Konservierungsmittel,
- einen schaumhemmenden Stoff,
- eine oder mehrere Säuren oder Basen in einer Menge, um den pH-Wert der Mischung gezielt einzustellen oder Verdicker zu aktivieren sowie
- weitere Komponenten zur Optimierung der anwendungstechnischen Eigenschaften der Formulierung.

Als Verdicker kommen alle üblicherweise für diesen Zweck in agrochemischen Mitteln einsetzbaren Substanzen in Betracht, die als Verdickungsmittel fungieren. Bevorzugt sind anorganische Partikel, wie Carbonate, Silikate und Oxide, sowie auch organische Substanzen, wie Harnstoff-Formaldehyd-Kondensate. Beispielhaft erwähnt seien Kaolin, Rutil, Siliciumdioxid, sogenannte hochdisperse Kieselsäure, Kieselgele, sowie natürliche und synthetische Silikate, außerdem Talkum. Als Verdicker können weiterhin synthetische Verdicker wie Polyacrylatverdicker (z.B Carbopol®- und Pemulen®-Verdicker der Firma Lubrizol, Cleveland, USA), biologische Verdicker (z.B. Kelzan® S, Xanthan Gum, oder weitere Hydrokolloide der Firma CP Kelco, Atlanta, USA) und anorganische Verdicker (z.B. Schichtsilikate wie Kaolin, Montmorillonit und Laoponit) eingesetzt werden

Als Konservierungsmittel kommen alle für diesen Zweck in agrochemischen Mitteln dieses Typs einsetzbaren Substanzen in Frage. Als Beispiele genannt seien Preventol® (Lanxess AG) und Proxel® (Arch Chemival, Inc.).

Als schaumhemmende Stoffe kommen alle für diesen Zweck in agrochemischen Mitteln einsetzbaren Substanzen in Betracht. Bevorzugt sind Silikonöle und Magnesiumstearat.

Der Anteil an Wirkstoff in den erfindungsgemäßen wässrigen Suspensionskonzentrate kann in einem weiten Bereich variiert werden und liegt im Allgemeinen zwischen 0,01 und 40 Gew.-%, bevorzugt zwischen 0,1 und 20 Gew.-%, bevorzugt zwischen 1 und 20 Gew.-% und besonders bevorzugt zwischen 1 und 10 Gew.-%.

Der Anteil an Polymer kann ebenfalls in einem weiten Bereich variiert werden. Er liegt in konzentrierten Formulierungen wie den wässrigen Suspensionskonzentraten im Allgemeinen zwischen 1 und 50 Gew.-%, bevorzugt zwischen 2 und 40 Gew.-% und besonders bevorzugt zwischen 6 und 20 Gew.-%. Die angegebenen Mengen geben dabei den Anteil bezogen auf den Feststoffgehalt an. Synthetisiert bzw. kommerziell angeboten und zur Herstellung der erfindungsgemäßen wässrigen Suspensionskonzentrate eingesetzt werden die Polymere häufig als wässrige Dispersion.

Der Anteil an Wirkstoff in gebrauchsfertigen Zusammensetzungen kann in einem weiten Bereich variiert werden. Im Fall von gebrauchsfertigen Formulierungen liegt er im Allgemeinen zwischen 0,001 und 0,5 Gew.-%, bevorzugt zwischen 0,01 und 0,1 Gew.-%.

Der Anteil an Polymer in gebrauchsfertigen Zusammensetzungen kann ebenfalls in einem weiten Bereich variiert werden. Er liegt in gebrauchsfertigen Formulierungen im Allgemeinen zwischen 0,002 und 1 Gew.-%, bevorzugt zwischen 0,004 und 0,8 Gew.-% und besonders bevorzugt zwischen 0,01 und 0,4 Gew.-%. Die angegebenen Mengen geben dabei den Anteil bezogen auf den Feststoffgehalt an. Kommerziell angeboten und zur Herstellung der erfindungsgemäßen wässrigen Suspensionskonzentrate eingesetzt werden die Polymere häufig als wässrige Dispersion.

Die Herstellung erfindungsgemäßer wässriger Suspensionskonzentrate erfolgt in der Weise, dass man die Komponenten in den jeweils gewünschten Verhältnissen miteinander vermischt. Die Reihenfolge, in der die Bestandteile miteinander vermengt werden, ist beliebig, allerdings wird der Verdicker üblicherweise zuletzt zuzugeben. Zweckmäßigerweise setzt man die festen Komponenten in feingemahlenem Zustand ein. Es ist aber auch möglich, die nach dem Vermengen der Bestandteile entstehende Suspension zunächst einer Grob- und dann einer Feinmahlung zu unterziehen, so dass die mittlere Teilchengröße z.B. unterhalb von 5 µm liegt.

Die Temperaturen können bei der Durchführung des erfindungsgemäßen Verfahrens in einem bestimmten Bereich variiert werden. Geeignete Temperaturen liegen zwischen 10°C und 60°C, vorzugsweise zwischen 15°C und 40°C. Zur Durchführung des erfindungsgemäßen Verfahrens kommen übliche Misch- und Mahlgeräte in Betracht, die zur Herstellung von agrochemischen Formulierungen eingesetzt werden.

Es ist auch möglich, Wirkstoffpartikel oder wirkstoffhaltige Partikel und/oder Granulate zu benutzen, die z.B. über Sprühtrocknung, Sprüherstarrung oder Wirbelschichtverfahren (wie beispielweise in EP 1 324 661 beschrieben) gewonnen wurden. Diese sind üblicherweise grobkörnig, d.h. beispielsweise mit einer mittleren Teilchengröße d50 größer als 5 µm (bestimmt nach Dispergierung in der Wasserphase durch Laserbeugung)

Die erfindungsgemäßen Formulierungen können mit gutem Erfolg zur Abtötung von schädlichen oder lästigen Arthropoden, insbesondere Spinnentieren und Insekten, verwendet werden.

Zu den Spinnentieren gehören Milben (z.B. Sarcoptes scabiei, Dermatophagoides pteronyssinus, Dermatophagoides farinae, Dermanyssus gallinae, Acarus siro) und Zecken (z.B. Ixodes ricinus, Ixodes scapularis, Argas reflexus, Ornithodorus moubata, Rhipicephalus (Boophilus) microplus, Amblyomma hebraeum, Rhipicephalus sanguineus).

Zu den saugenden Insekten gehören im Wesentlichen die Stechmücken (z.B. Aedes aegypti, Aedes vexans, Culex quinquefasciatus, Culex tarsalis, Anopheles albimanus, Anopheles stephensi, Mansonia titillans), Schmetterlingsmücken (z.B. Phlebotomus papatasii), Gnitzen (z.B. Culicoides furens), Kriebelmücken (z.B. Simulium damnosum), Stechfliegen (z.B. Stomoxys calcitrans), Tsetse-Fliegen (z.B. Glossina morsitans morsitans), Bremsen (z.B. Tabanus nigrovittatus, Haematopota pluvialis, Chrysops caecutiens), Echte Fliegen (z.B. Musca domestica, Musca autumnalis, Musca vetustissima, Fannia canicularis), Fleischfliegen (z.B. Sarcophaga carnaria), Myiasis erzeugende Fliegen (z.B. Lucilia cuprina, Chrysomyia chloropyga, Hypoderma bovis, Hypoderma lineatum, Dermatobia hominis, Oestrus ovis, Gasterophilus intestinalis, Cochliomyia hominivorax), Wanzen (z.B. Cimex lectularius, Rhodnius prolixus, Triatoma infestans), Läuse (z.B. Pediculus humanis, Haematopinus suis, Damalina ovis), Flöhe (z.B. Pulex irritans, Xenopsylla cheopis, Ctenocephalides canis, Ctenocephalides felis) und Sandflöhe (Tunga penetrans).

Zu den beißenden Insekten gehören im wesentlichen Schaben (z.B. Blattella germanica, Periplaneta americana, Blatta orientalis, Supella longipalpa), Käfer (z.B. Sitiophilus granarius, Tenebrio molitor, Dermestes lardarius, Stegobium paniceum, Anobium punctatum, Hylotrupes bajulus), Termiten (z.B. Reticulitermes lucifugus), Ameisen (z.B. Lasius niger, Monomorium pharaonis), Wespen (z.B. Vespula germanica) und Larven von Motten (z.B. Ephestia elutella, Ephestia cautella, Plodia interpunctella, Hofmannophila pseudospretella, Tineola bisselliella, Tinea pellionella, Trichophaga tapetzella).

Bevorzugt werden die erfindungsgemäßen Materialien gegen Insekten, vor allem der Ordnungen Diptera und Dictyoptera eingesetzt.

Da die erfindungsgemäßen wässrigen Suspensionskonzentrate nicht gebrauchsfertiger Form vorliegen, werden sie für ihren bestimmungsgemäßen Gebrauch zunächst in Wasser verdünnt. Es wird dabei so weit verdünnt, dass der Wirkstoffgehalt bei der beabsichtigen Auftragsmenge eine ausreichende insektizide Wirkung sichert. Die Verdünnung ergibt dabei Zusammensetzungen, die den oben spezifizierten anwendungsfertigen Zusammensetzungen entsprechen.

Die verdünnte Sprühlösung kann auf jede übliche Art versprüht werden, z.B. durch handbetriebene oder elektrische Sprüher.

Der Wirkstoff wird dabei im Allgemeinen in einer Flächen-Konzentration von 1 bis 1000 mg/m² ausgebracht, bevorzugt in einer Konzentration von 1 bis 500 mg/m², besonders bevorzugt in einer Konzentration von 5 bis 250 mg/m² und ganz besonders bevorzugt in einer Konzentration von 10 bis 250 mg/m².

Bevorzugt werden die erfindungsgemäßen Zusammensetzungen in solcher Verdünnung und Aufwandmenge auf eine Oberfläche appliziert, dass ein Flächenauftrag des Polymers (bezogen auf Feststoff) von 1,0 mg/m² bis 2000 mg/m², bevorzugt von 5,0 mg/m² bis 500 mg/m², besonders bevorzugt von 5 mg/m² bis 200 mg/m² und besonders bevorzugt von 10 mg/m² bis 200 mg/m² vorliegt

Die erfindungsgemäßen Zusammensetzungen können auf beliebige Oberfläche innerhalb von Gebäuden oder im Freien angewendet werden, z.B. Tapete, Beton, Putz, Mauerstein, Holz (behandelt und unbehandelt), Keramik (lasiert und unlasiert), Stroh bzw. Reet, Ziegel (roh, gekalkt, gestrichen), Tonmineralien (z.B. Terrakotta), kreidehaltige, kalkhaltige, gipshaltige, zementhaltige und lehmhaltige Oberflächen.

Die erfindungsgemäßen Zubereitungen können auch im Bereich Tiergesundheit, d.h. auf dem veterinärmedizinischen Gebiet, eingesetzt werden, und zwar zur Bekämpfung von Parasiten, insbesondere Ektoparasiten, bei Tieren. Ektoparasiten sind typischerweise und vorzugsweise Arthropoden, insbesondere Insekten wie Fliegen (stechend und leckend), parasitische Fliegenlarven, Läuse, Haarlinge, Federlinge, Flöhe und dergleichen; oder Akariden wie Zecken, zum Beispiel Schildzecken oder Lederzecken, oder Milben wie Räudemilben, Laufmilben, Federmilben und dergleichen.

### Zu diesen Parasiten gehören:

Aus der Ordnung der Anoplurida, z. B. Haematopinus spp., Linognathus spp., Pediculus spp., Phtirus spp., Solenopotes spp.; aus der Ordnung der Mallophagida und den Unterordnungen Amblycerina und Ischnocerina, z. B. Trimenopon spp., Menopon spp., Trinoton spp., Bovicola spp., Werneckiella spp., Lepikentron spp., Damalina spp., Trichodectes spp., Felicola spp.; aus der Ordnung der Diptera und den Unterordnungen Nematocerina und Brachycerina, z. B. Aedes spp., Anopheles spp., Culex spp., Simulium spp., Eusimulium spp., Phlebotomus spp., Lutzomyia spp., Culicoides spp., Chrysops spp., Odagmia spp., Wilhelmia spp., Hybomitra spp., Atylotus spp., Tabanus spp., Haematopota spp., Philipomyia spp., Braula spp., Musca spp., Hydrotaea spp., Stomoxys spp., Haematobia spp., Morellia spp., Fannia spp., Glossina spp., Calliphora spp., Lucilia spp., Chrysomyia spp., Wohlfahrtia spp., Sarcophaga spp., Oestrus spp., Hypoderma spp., Gasterophilus spp., Hippobosca spp., Lipoptena spp., Melophagus spp., Rhinoestrus spp., Tipula spp.; aus der Ordnung der Siphonapterida z. B. Pulex spp., Ctenocephalides spp., Tunga spp., Xenopsylla spp., Ceratophyllus spp.; aus der Unterklasse der Acari (Acarina) und den Ordnungen der Meta- and Mesostigmata z. B. Argas spp., Ornithodorus spp., Otobius spp., Ixodes spp., Amblyomma spp., Rhipicephalus (Boophilus) spp.; Dermacentor spp., Haemophysalis spp., Hyalomma spp., Dermanyssus spp., Rhipicephalus spp. (der ursprünglichen Gattung der Mehrwirtszecken), Ornithonyssus spp., Pneumonyssus spp., Raillietia spp., Sternostoma spp., Varroa spp., Acarapis spp.; aus der Ordnung der Actinedida (Prostigmata) und Acaridida (Astigmata) z.B. Acarapis spp., Cheyletiella spp., Ornithocheyletia spp., Myobia spp., Psorergates spp., Demodex spp., Trombicula spp., Listrophorus spp., Acarus spp., Tyrophagus spp., Caloglyphus spp., Hypodectes spp., Pterolichus spp., Psoroptes spp., Chorioptes spp., Otodectes spp., Sarcoptes spp., Notoedres spp., Knemidocoptes spp., Cytodites spp., Laminosioptes spp.

Bevorzugt werden die erfindungsgemäßen Zubereitungen in der Veterinärmedizin eingesetzt zur Bekämpfung der folgenden Parasiten:
Fliegen (Ordnung Diptera), insbesondere die Kleine Weidestechfliege ("*horn flies*", z.B.
Haematobia irritans), Wadenstecher ("*stable flies*" z.B. Stomoxys calcitrans), Augenfliegen ("*face flies*", z.B. Musca autumnalis), Stubenfliegen ("*House flies*", z.B. Musca domestica), Schmeissfliegen (Myiasis erzeugende Fliegen, "*blow flies*", Familie Calliphoridae), Stechmücken ("*Mosquitoes*" Familie Culicidae), Kriebelmücken ("*black flies*", Familie Simuliidae), Gnitzen (Culicoides spp.), Schmetterlingsmücken (Phlebotomus spp.)

Läuse, insbesondere beissende Läuse (Haarlinge, "chewing lice", Ordnung Mallophaga), saugende Läuse ("*sucking lice*", Ordnung Anoplura);

Zecken, inbesondere Schildzecken ("*hard ticks*", Familie Ixodidae), z.B. Ixodes ricinus, I. scapularis, Amblyomma americanum, A. hebraeum, Rhipicephalus sanguineus, Rhipicephalus (Boophilus) microplus, R. (B.) decoloratus, Dermacentor variabilis, D. reticulates, Haemophysalis leachi, Hyalomma anatolicum; Lederzecken ("*soft ticks*" Familie Argasidae), z. B. Argas reflexus, Ornithodorus moubata;

Milben, insbesondere mesostigmate Milben, z.B. Dermanyssus gallinae, Ornithonyssus sylviarum; pro- und astigmate Milben, z.B. Demodex canis, Neotrombicula autumnalis, Otodectes cynotis, Notoedres cati, Sarcoptis canis, Sarcoptes bovis, Sarcoptes ovis, Sarcoptes suis, Psoroptes ovis.

Das genaue Wirkspektrum der erfindungsgemäßen Zubereitungen hängt natürlich von den eingesetzten Wirkstoffen ab.

In Zubereitungen für die veterinärmedizinische Anwendung sind unter anderem folgende Wirkstoffe besonders bevorzugt:
Neonicotinoide, wie z. B. Clothianidin, Imidacloprid, Thiacloprid; Pyrethroide, wie z.B. Cyfluthrin, beta-Cyfluthrin; Organo(thio)phosphate wie z. B. Coumaphos; Pyrazole, wie z. B. Fenpyroximat oder Tolfenpyrad; Pyrrole wie z. B. Chlorfenapyr und Carbamat-Insektizide wie z. B. Indoxacarb.

Die erfindungsgemäßen Zubereitungen eignen sich vorzugsweise zur Bekämpfung von ektoparasitären Arthropoden die Tiere befallen. Zu den Tieren zählen landwirtschaftliche Nutztiere wie z.B. Rinder, Schafe, Ziegen, Pferde, Schweine, Esel, Kamele, Büffel, Kaninchen, Hühner, Puten, Enten, Gänse, Zuchtfische. Zu den Tieren zählen außerdem Haustiere - die auch als Heimtiere bezeichnet werden - wie z.B. Hunde, Katzen, Stubenvögel, Aquarienfische sowie sogenannte Versuchstiere wie z.B. Hamster, Meerschweinchen, Ratten und Mäuse. Bevorzugte Haustiere sind Katzen oder Hunde.

Weiterhin bevorzugt ist die Anwendung bei Pferden.

Besonders bevorzugt ist die Anwendung bei Schafen, Ziegen oder insbesondere bei Rindern oder Schweinen.

Durch die Bekämpfung dieser Parasiten sollen Todesfälle vermindert und die Leistung (bezüglich Fleisch, Milch, Wolle, Häuten, Eiern, Honig usw.) sowie die Gesundheit des Wirtstieres verbessert werden, so dass durch den Einsatz der erfindungsgemäßen Wirkstoffe eine wirtschaftlichere, einfachere und bessere Tierhaltung möglich ist.

So ist es beispielsweise wünschenswert, die Aufnahme von Blut des Wirts durch die Parasiten (soweit dies auf den betreffenden Parasiten zutrifft) zu verhindern oder zu minimieren. Eine Bekämpfung der Parasiten kann außerdem dazu beitragen, die Übertragung infektiöser Erreger zu verhindern.

Der Begriff "Bekämpfung", so wie er hier bezogen auf den Bereich Tiergesundheit verwendet wird, bedeutet, dass die Zubereitungen wirken, indem sie das Vorkommen des betreffenden Parasiten in einem mit solchen Parasiten befallenen Tier auf ein unschädliches Niveau reduzieren. Genauer gesagt bedeutet "Bekämpfung", wie hier verwendet, dass die Zubereitung den betreffenden Parasiten tötet, sein Wachstum hemmt oder seine Proliferation inhibiert.

Im Allgemeinen können die erfindungsgemäßen Zubereitungen, wenn sie für die Behandlung von Tieren eingesetzt werden, direkt angewendet werden. Vorzugsweise werden sie als pharmazeutische Zusammensetzungen angewendet, die weitere im Stand der Technik bekannte pharmazeutisch unbedenkliche Exzipienten und/oder Hilfsstoffe enthalten können.

Die Anwendung (= Verabreichung) der Zubereitungen im Bereich Tiergesundheit und in der Tierhaltung erfolgt in an sich bekannter Weise vorzugsweise durch äußerliche Anwendung in Form beispielsweise des Tauchens oder Badens (Dippen), Sprühens (Spray), Aufgießens (Pour-on und Spot-on), des Waschens usw. Die Zubereitungen können dazu beispielsweise als Aufgießformulierungen (pour-on), spot-on-Formulierungen, als Shampoo oder Spray, wie Aerosole oder drucklose Sprays (z.B. Pumpsprays und Zerstäubersprays) formuliert werden.

Beim Einsatz im Bereich Tiergesundheit können die erfindungsgemäßen Zubereitungen Wirkstoffkombinationen mit geeigneten Synergisten oder weiteren Wirkstoffen wie beispielsweise Akariziden oder Insektiziden enthalten.

### Herstellungsbeispiele

### Beispiel 1

In einem Kolben mit Rührer, Rückflusskühler und Mantelheizung dispergiert man unter Stickstoff 124,5 g oxidativ abgebaute Kartoffelstärke in 985 g entionisiertem Wasser und löst durch Erwärmen. Nacheinander gibt man 42,7 g einer 1%-igen Eisen(II)sulfat-Lösung sowie 116 g einer 3%-igen Wasserstoffperoxid-Lösung zu und rührt 15 min bei 86°C. Nach 15 Minuten dosiert man gleichzeitig, aber getrennt mit konstanter Dosiergeschwindigkeit innerhalb 90 min bei 86°C die folgenden zwei Dosierlösungen zu:
1) 321 g einer Mischung aus Styrol, n-Butylacrylat und tert-Butylacrylat
2) 93,7 g einer 3%-igen Wasserstoffperoxid-Lösung.

Nach Beendigung der Dosierung rührt man weitere 15 min bei 86°C nach und gibt dann zur Nachaktivierung 2 g t-Butylhydroperoxid zu. Nach weiteren 60 min bei 86°C kühlt man auf Raumtemperatur ab, gibt 10 g einer 10%-igen Lösung von EDTA als Tetranatriumsalz zu und stellt mit 13 g einer 10%igen Natronlauge einen pH-Wert von 6,5 ein. Man filtriert über ein 100 µm Filtertuch und erhalt eine feinteilige Dispersion mit einem Feststoffgehalt von 24,0 Gew.-%.

Das Verhältnis von Styrol, n-Butylacrylat und tert-Butylacrylat kann je nach gewünschten Polymereigenschaften (Glastemperatur, Mindestfilmbildetemperatur) variiert werden. Das geeignete Verhältnis kann experimentell gemäß obiger Anleitung bestimmt werden.

### Biologische Beispiele

### Beispiel A

Es wurde eine Polymerdispersion (nachfolgend bezeichnet als PD-SACP) gemäß oben angegebenem Herstellungsbeispiel 1 hergestellt. Die Monomerzusammensetzung wurde dabei so eingestellt, dass das Polymer eine Glastemperatur von 50 °C und eine Mindestfilmbildetemperatur von 44 °C aufwies. Der Trübungswert der auf 0,025 Gew.-% verdünnten Dispersion betrug E = 0,02 (535 nm, 1 cm Küvette). Als Verdünnungsmedium wurde demineralisiertes Wasser verwendet. Vergleichende Messungen mit einer 50 mM-Lösung von CaCl₂-Lösung führten jedoch zu identischen Extinktionswerten.

Zwei Sprühlösungen FL1 und FL2 wurden wie folgt angesetzt:

**Tabelle 1: Zusammensetzung Sprühlösungen**

| | FL1 | FL2 |
|---|---|---|
| | Gew.-% | Gew.-% |
| Crackdown ® SC 10 (Bayer CropScience AG) | 7,14 | 7,14 |
| PD-SACP | --- | 0,60 |
| Wasser | 92,86 | 92,26 |

Diese Lösungen wurden mit einer Aufwandmenge von 25 mg Deltamethrin pro m² mit einer Flachstrahldüse (Typ SS 8003 E) auf eine Betonoberfläche gesprüht. Die Ausbringrate für die Sprühlösungen betrug somit 35 ml/m². Zur Herstellung der Betonoberfläche wurde der Trockenmörtel Weber.mix 604 (Saint-Gobain Weber GmbH) gemäß Herstellerangaben mit Wasser gemischt und gerührt, in Petrischalen zur Aushärtung abgefüllt (13,5 cm Durchmesser, 2 cm Höhe) und anschließend mindestens 3 Wochen gelagert.

Die behandelten Oberflächen wurden anschließend bei 35°C und 80% relativer Luftfeuchtigkeit gelagert und nach 2 Wochen Lagerung getestet.

Dazu wurden die mit Kohlendioxid betäubten Mücken (Culex quinquefasciatus) in die Mitte der behandelten Oberflächen gegeben und mit einem mit Gaze versehenen Aluminiumring (Mücken) abgedeckt. Die Expositionszeit betrug 24 Stunden. Während der Exposition betrug die Temperatur 24-26 °C, die Luftfeuchtigkeit wurde nicht geregelt. Nach 0,5, 1, 2, 4 und 6 Stunden wurde die Knock-down - Wirkung registriert, nach 24 Stunden die Mortalität. Jeder Test bestand aus 3 Wiederholungen, aus denen der Mittelwert gebildet wurde. Die Ergebnisse zeigt Tabelle 2.

**Tabelle 2: Wirkung von Crackdown® SC 010 ohne (FL1) und mit PD-SACP (FL2) nach 2 Wochen Lagerung gegen Culex quinquefasciatus**

| Ablesung | FL1 | FL2 |
|---|---|---|
| (h) | % Knock-Down/Mortalität | % Knock-Down/Mortalität |
| 0,5 | 0 | 0 |
| 1 | 0 | 0 |
| 2 | 3 | 0 |
| 4 | 3 | 0 |
| 6 | 15 | 25 |
| 24 | 45 | 95 |

Es ist überraschend, dass die Wirkstoffdispersion mit PD-SACP bessere Ergebnisse zeigt, als die Wirkstoffdispersion ohne Polymerdispersion.

### Beispiel B

Eine Reihe von Sprühlösungen FL3 bis FL8 auf Basis von Responsar® SC 025 (Bayer CropScience AG, enthaltend 25 g/l Beta-Cyflutrhin) wurden wie folgt angesetzt:

**Tabelle 3: Zusammensetzung Sprühlösungen FL3 bis FL8**

| | FL3 | FL4 | FL5 | FL6 | FL7 | FL8 |
|---|---|---|---|---|---|---|
| | Gew.-% | Gew.-% | Gew.-% | Gew.-% | Gew.-% | Gew.-% |
| Responsar ® SC 025 | 2,86 | 2,86 | 2,86 | 2,86 | 2,86 | 2,86 |
| PD-SACP | --- | 0,14 | 0,29 | 0,59 | 0,89 | 1,19 |
| Wasser | 97,14 | 97,00 | 96,85 | 96,55 | 96,25 | 95,95 |

Analog Beispiel A wurde die biologische Wirkung dieser Formulierungen auf Betonplatten getestet. Die Aufwandmenge an Beta-Cyfluthrin betrug 25 mg pro m².

Die Ergebnisse zeigt Tabelle 4.

**Tabelle 4: Wirkung von Responsar ® SC 025 ohne (FL3) und mit aufsteigenden Konzentrationen von PD-SACP (FL4 - FL8) nach 2 Wochen Lagerung gegen Culex quinquefasciatus**

| | FL3 | FL4 | FL5 | FL6 | FL7 | FL8 |
|---|---|---|---|---|---|---|
| (h) | % Knock-Down / Mortalität | % Knock-Down / Mortalität | % Knock-Down / Mortalität | % Knock-Down / Mortalität | % Knock-Down / Mortalität | % Knock-Down / Mortalität |
| 0,5 | 2 | 5 | 0 | 0 | 2 | 7 |
| 1,0 | 2 | 3 | 0 | 20 | 13 | 22 |
| 2,0 | 3 | 23 | 0 | 83 | 40 | 47 |
| 4,0 | 12 | 63 | 38 | 100 | 95 | 93 |
| 6,0 | 42 | 93 | 88 | 100 | 98 | 100 |
| 24 | 75 | 97 | 98 | 100 | 100 | 100 |

Es ist überraschend, dass die biologische Wirkung von Beta-Cyfluthrin deutlich durch Zusatz von PD-SACP gesteigert wird.

### Beispiel C

Ein Deltamethrin-Suspensionskonzentrat mit und ohne PD-SACP wurde durch Feinmahlung über eine Perlmühle wie folgt hergestellt:

**Tabelle 5: Zusammensetzung der Suspensionskonzentrate FL9 und FL10**

| | FL9 | FL10 |
|---|---|---|
| | Gew.-% | Gew.-% |
| Deltamethrin | 3,00 | 3,00 |
| Soprophor FLK (Rhodia) | 0,18 | 0,18 |
| Emulgator PS 29 (Tanatex Chemicals) | 0,18 | 0,18 |
| Zitronensäure | 0,02 | 0,02 |
| Kelzan (CP Kelco) | 0,06 | 0,06 |
| PD-SACP | --- | 25,00 |
| Wasser | 96,57 | 71,57 |

Beide Formulierungen wurden in Wasser verdünnt (auf 0,07 Gew.-% Deltamethrin) und analog Beispiel A auf Betonplatten (Weber.mix 604) aufgesprüht (Aufwandmenge 25 mg Deltamethrin pro m²) und biologisch getestet (nach eine Woche Lagerung bei 35°C und 80% relativer Luftfeuchtigkeit). Die Ergebnisse zeigt Tabelle 6.

**Tabelle 6: Wirkung von Deltamethrin-Suspensionskonzentrat ohne (FL9) und mit PD-SACP (FL10) nach 2 Wochen Lagerung gegen Culex quinquefasciatus**

| | FL9 | FL10 |
|---|---|---|
| Ablesung / h | % Knock-Down/Mortalität | % Knock-Down/Mortalität |
| 0,5 | 0 | 0 |
| 1 | 0 | 0 |
| 2 | 3 | 0 |
| 4 | 3 | 15 |
| 6 | 3 | 32 |
| 24 | 15 | 100 |

Es ist ersichtlich, dass die erfindungsgemäße Formulierung bessere Ergebnisse zeigt als das Suspensionskonzentrat ohne PD-SACP.

### Beispiel D

Ein Deltamethrin-Suspensionskonzentrat mit PD-SACP wurde durch Feinmahlung über eine Perlmühle wie folgt angesetzt:

**Tabelle 7: Zusammensetzung Suspensionskonzentrat FL11**

| | FL11 |
|---|---|
| | Gew.-% |
| Deltamethrin | 3,00 |
| Dispersogen SI (Clariant) | 1,80 |
| Rhodopol 23 (Rhodia) | 0,08 |
| Zitronensäure | 0,02 |
| Agnique SLS 90P (Cognis) | 0,01 |
| PD-SACP | 25,00 |
| Wasser | 95,09 |

Aus der Formulierung FL11 und dem kommerziell erhältlichen Granulat K-Othrine® WG 250 (Bayer CropScience AG, enthaltend 25 Gew.-% Deltamethrin) wurden in Wasser Deltamethrin-Dispersionen (0,07 Gew.-% Deltamethrin) hergestellt und analog Beispiel A auf unterschiedlichen Betonplatten (Weber.mix 601 bzw. 604) aufgesprüht (Aufwandmenge 25 mg Deltamethrin pro m²) und biologisch getestet (nach 2 Wochen Lagerung bei 35°C und 80% relativer Luftfeuchtigkeit). Die Ergebnisse zeigt Tabelle 8.

**Tabelle 8: Wirkung von Deltamethrin-Suspensionskonzentrat mit PD-SACP (FL11) und von K-Othrine® WG 250 ohne PD-SACP nach 2 Wochen Lagerung gegen Culex quinquefasciatus**

| Substrat | Weber. mix 601 | | Weber. mix 604 | |
|---|---|---|---|---|
| Ablesung | FL11 | K-Othrine® WG 250 | FL11 | K-Othrine® WG 250 |
| (h) | % Knock-Down/Mortalität | % Knock-Down/Mortalität | % Knock-Down/Mortalität | % Knock-Down/Mortalität |
| 0,5 | 0 | 0 | 0 | 0 |
| 1 | 2 | 0 | 7 | 3 |
| 2 | 3 | 2 | 53 | 10 |
| 4 | 17 | 8 | 92 | 33 |
| 6 | 53 | 22 | 100 | 57 |
| 24 | 92 | 95 | 100 | 100 |

Es ist ersichtlich, dass die erfindungsgemäße Formulierung bessere Ergebnisse zeigt als K-Othrine® WG 250, obwohl dieses Produkt speziell für die lang anhaltende Imprägnierung von Oberflächen mit Deltamethrin vorgesehen ist.

### Beispiel E

Analog Herstellungsbeispiel 1 wurden wässrige Polymerdispersionen auf Basis Styrol(Meth)acrylsäurester-Copolymerisaten durch radikalisch initiierte Emulsionspolymerisation mit unterschiedlichen Monomerzusammensetzungen hergestellt. Auf diese Weise wurden die Polymerdispersionen PD1 bis PD6 mit einem Feststoffgehalt von 24 Gew.-% und unterschiedlichen Glastemperaturen und Mindestfilmbildetemperaturen erhalten (s. Tabelle 9).

Die Feinteiligkeit der Polymerdispersionen wurde durch eine Extinktionsmessung in einer wässrigen Dispersion mit einem Feststoffgehalt von 0,025 Gew.-% (1 cm Küvette, 535 nm) charakterisiert. Als Verdünnungsmedium wurde demineralisiertes Wasser benutzt. Vergleichende Messungen mit einer 50 mM CaCl₂-Lösung als Verdünnungsmedium führten jedoch zu identischen Extinktionswerte.

**Tabelle 9: Physikalische Daten**

| | Glastemperatur | Mindestfilmbildetemperatur | Extinktion |
|---|---|---|---|
| Polymerdispersion | (°C) | (°C) | (-) |
| PD 1 | 50 | 44 | 0,019 |
| PD 2 | 34,5 | 27 | 0,014 |
| PD 3 | 78,5 | 70 | 0,019 |
| PD 4 | 22,5 | 13 | 0,015 |
| PD 5 | 37 | 28 | 0,016 |
| PD 6 | 52,5 | 47 | 0,025 |

Analog zu Formulierung FL11 aus Beispiel D wurden Suspensionskonzentrate mit Deltamethrin und jeweils einer der Polymerdispersionen PD1 bis PD6 (als Ersatz für PD-SACP) hergestellt und biologisch auf Betonplatten (Weber.mix 604) geprüft (Lagerung der Betonplatten bei 35°C und 80% relativer Luftfeuchtigkeit bis zu 2 Wochen; Auswertung der Mortalität nach 24 h). Als Referenz wurde die Formulierung FL11 aus Beispiel D ohne Polymerdispersion durch Anpassung des Wassergehaltes angesetzt und biologisch geprüft. Die Ergebnisse zeigt Tabelle 10.

**Tabelle 10: Wirkung von Deltamethrin-Suspensionskonzentrat mit verschiedenen Polymerdispersionen nach 1 Tag. 1 und 2 Wochen Lagerung gegen Culex quinquefasciatus**

| Lagerung | 1 Tag | 1 Woche / 35°C | 2 Wochen / 35°C |
|---|---|---|---|
| | % Mortalität (24h) | % Mortalität (24h) | % Mortalität (24h) |
| PD 1 | 100 | 98 | 67 |
| PD 2 | 100 | 85 | 38 |
| PD 3 | 100 | 98 | 67 |
| PD 4 | 100 | 80 | 35 |
| PD 5 | 100 | 78 | 32 |
| PD 6 | 100 | 93 | 60 |
| Referenz ohne Polymerdispersion | 100 | 57 | 20 |

Es ist überraschend, dass mit den erfindungsgemäßen Formulierungen eine Verbesserung der biologischen Wirkung erzielt wird.

### Beispiel F

Das Handelsprodukt Tempo® Ultra SC (Wirkstoff beta-Cyfluthrin) wurde gemäß Gebrauchsanweisung mit Wasser verdünnt. Der fertigen Sprühlösung wurde PD-SACP zugesetzt bis 0,5 Gew.-%. Diese fertigen Sprühlösungen wurden auf Holzplatten mit einer Auftragsmenge von 40 ml pro m² ausgebracht. Die so behandelten Platten wurden mit Insekten (Acheta) besetzt und die Mortalität gemessen. Zwischen den Messungen wurden die behandelten Platten im Freien unter Sonnen- und Regeneinfluss gelagert.

**Tabelle 11: Wirkung von Tempo® Ultra (Bayer CropScience AG) ohne und mit PD-SACP auf Fichtenholz nach 56 Tagen Lagerung im Freien (Durchschnittstemperatur 26°C, Niederschlag 300 mm) gegen Heimchen (Acheta domesticus)**

| | Tempo® Ultra | Tempo® Ultra & PD SACP |
|---|---|---|
| (min) | % Mortalität | % Mortalität |
| 15 | 0 | 0 |
| 30 | 0 | 0 |
| 45 | 0 | 0 |
| 60 | 5 | 40 |
| 90 | 20 | 60 |
| 120 | 25 | 90 |
| 180 | 38 | 95 |

Die biologische Wirkung gegen kriechende Insekten wird durch die erfindungsgemäße Formulierung auch bei Regen und Lichteinfluss verbessert.

### Beispiel G

Das Handelsprodukt Temprid® (Wirkstoffmischung beta-Cyfluthrin und Imidacloprid) wurde gemäß Gebrauchsanweisung mit Wasser verdünnt. Der fertigen Sprühlösung wurde PD-SACP zugesetzt bis 0,5 Gew.-%. Diese fertigen Sprühlösungen wurden auf glasierten Kacheln mit einer Auftragsmenge von 40 ml pro m² ausgebracht. Die so behandelten Platten wurden mit Insekten (Blattella) besetzt und die Mortalität gemessen. Zwischen den Messungen wurden die behandelten Platten im Freien unter Sonnen- und Regeneinfluss gelagert.

**Tabelle 12: Wirkung von Temprid® (Bayer CropScience AG) ohne und mit PD-SACP auf Kacheln nach der angegebenen Anzahl Tagen (d) Lagerung im Freien (Durchschnittssonnenscheindauer 4,3 h/d, Niederschlag 170 mm) gegen Deutsche Schaben (Blattella germanica). Angegeben ist Mortalität nach 24h, und 30 min Expositionszeit der Insekten auf den behandelten Oberflächen.**

| | 1d | 14d | 28d | 56d | 112d |
|---|---|---|---|---|---|
| Temprid® | 100 | 70 | 0 | 0 | 0 |
| Temprid® & PD SACP | 100 | 70 | 40 | 100 | 90 |

Die biologische Wirksamkeit von Wirkstoffmischungen wird durch die erfindungsgemäße Formulierung verbessert.

### Beispiel H

In einem Freilandversuch wurde die Wirkung einer Zubereitung mit Polymerzusatz im Vergleich zu einer Zubereitung ohne Polymerzusatz auf Haematobia irritans (Kleine Weidestechfliege, "horn fly") bei Rindern untersucht.

Für die Vergleichszubereitung "A" wurde das Handelsprodukt *Poncho 600*® (Produkt zur Samenbehandlung, SC mit 48% Clothianidin) mit Wasser auf 6% Wirkstoffgehalt verdünnt. Diese Mischung wurde in einer Dosierung von 10 mg Wirkstoff/kg Körpergewicht (100 mL pro Tier) äußerlich auf den Rücken von Rindern aufgebracht.

Für die Zubereitung "B" wurde das Handelsprodukt *Poncho 600*® mit Wasser auf 6% Wirkstoffgehalt verdünnt, dann wurden 29,5mL/L S.A.C.P zugesetzt. Diese Mischung wurde in einer Dosierung von 10 mg Wirkstoff/kg Körpergewicht (100 mL pro Tier) äußerlich auf den Rücken von Rindern aufgebracht. Die Rinder wurden in drei Behandlungsgruppen unterteilt: Kontrollgruppe: unbehandelt (10 Tiere); Gruppe A: behandelt mit Zubereitung A (5 Tiere), Gruppe B: behandelt mit Zubereitung B (5 Tiere).

Behandlungsschema: Am Tag 0 (10.00 bis 12.00 Uhr) wurden die Fliegen bei allen Tieren gezählt, die Gruppen A und B wurden danach sofort wie angegeben behandelt. Am selben Tag (15.00 bis 16.00 Uhr) sowie an den darauffolgenden Tagen (siehe Tabelle) wurden die Fliegen erneut gezählt.

Während der Studie regnete es am Tag 5 (nach der Fliegenzählung), an den Tagen 13 bis 15, am Tag 16 (nach der Fliegenzählung) und an den Tagen 20, 21. Es zeigte sich, dass die Wirkung der Zubereitung B durch den Regen weniger beeinflusst wurde als die der Zubereitung A.

**Tabelle 13: Versuche zur Bekämpfung der Kleinen Weidenstechfliege bei Rindern**

| **Clothianidin Rinder Pour-on - Bekämpfung der Kleinen Weidestechfliege bei Rindern** | | | | | | | | | |
|---|---|---|---|---|---|---|---|---|---|
| | Durchschnittliche Anzahl Fliegen/Tier | | | | | | | | |
| | Tag 0 | | | | | | | | |
| **Behandlungsgruppe** | v. Bh.* | n. Bh.* | Tag 2 | Tag 5 | Tag 9 | Tag 13 | Tag 16 | Tag 19 | Day 24 |
| Unbehandelte Kontrollgruppe | 389 | 347 | 346 | 394 | 339 | 301 | 336 | 209 | 43 |
| Gruppe A (Clothianidin) | 462 | 6 | 4 | 3 | 27 | 157 | 174 | 164 | 72 |
| Gruppe B (Clothianidin + PD SACP) | 350 | 2 | 1 | 2 | 2 | 9 | 42 | 28 | 8 |
| | | | | | | | | | |

| | % Wirkung (bezogen auf unbehandelte Kontrollgruppe) | | | | | | | | |
|---|---|---|---|---|---|---|---|---|---|
| | | Tag 0 | | | | | | | |
| Unbehandelt (Kontrolle) | | n. Bh.* | Tag 2 | Tag 5 | Tag 9 | Tag 13 | Tag 16 | Tag 19 | Day 24 |
| Gruppe A (Clothianidin) | | 98% | 99% | 99% | 92% | 48% | 48% | 21% | 0% |
| Gruppe B (Clothianidin + PD SACP) | | 99.5 % | 99.7 % | 99.5 % | 99% | 97% | 88% | 87% | 82% |

| | | | | | | | | | |
|---|---|---|---|---|---|---|---|---|---|
| * v. Bh = vor Behandlung, n. Bh. = nach Behandlung | | | | | | | | | |

## Patentansprüche

1. Wässriges Suspensionskonzentrat enthaltend
- mindestens ein Insektizid,
- ein nicht-ionisches und/oder ein ionisches Dispergierhilfsmittel,
- eine wässrige Polymerdispersion,
**dadurch gekennzeichnet, dass** die Polymerdispersion durch Polymerisation in Gegenwart eines Hydrokolloids als Propfgrundlage hergestellt wird,
wobei die Polymerdispersion durch radikalisch initiierte Emulsionscopolymerisation von ethylenisch ungesättigten Monomeren in Gegenwart von Stärke erhältlich ist, **dadurch gekennzeichnet, dass** als ethylenisch ungesättigte Monomere
(a) 30 bis 60 Gew.-% mindestens eines gegebenenfalls substituierten Styrols,
(b) 60 bis 30 Gew.-% mindestens eines (Meth)acrylsäure-C₁-C₄-Alkylesters,
(c) 0 bis 10 Gew.-% an anderen ethylenisch ungesättigten copolymerisierbaren Monomeren,
als Stärke (d) 10 bis 40 Gew.-% abgebaute Stärke mit einem Molgewicht Mₙ = 500 bis 10 000, wobei die Summe (a) + (b) + (c) + (d) 100% beträgt,
und als Radikalstarter für die radikalisch initiierte Emulsionspolymerisation ein pfropfaktives, wasserlösliches Redoxsystem eingesetzt wird.

2. Wässriges Suspensionskonzentrat gemäß Anspruch 1, **dadurch gekennzeichnet, dass** die Polymerdispersion in einer Konzentration von 0,025 Gew.-% in demineralisiertem Wasser bei einer Wellenlänge von 535 nm und einem Lichtweg von 1 cm eine Extinktion kleiner 2,0 aufweist.

3. Wässriges Suspensionskonzentrat gemäß einem der Ansprüche 1 oder 2, wobei die Polymerdispersion nach Eintrocknung eine Glastemperatur oberhalb von 0 °C aufweist.

4. Nicht-therapeutische Verwendung eines wässrigen Suspensionskonzentrats gemäß einem der Ansprüche 1 bis 3 zur Schädlingsbekämpfung.

5. Nicht-therapeutische Verwendung eines wässrigen Suspensionskonzentrats gemäß Anspruch 4 durch Behandlung einer Oberfläche mit einem Flächenauftrag von 1,0 mg/m² bis 2000 mg/m² Polymer bezogen auf den Feststoffgehalt.

6. Wässriges Suspensionskonzentrat gemäß einem der Ansprüche 1 bis 3 zur Verwendung als Arzneimitteln zur Bekämpfung von Ektoparasiten bei Tieren.

7. Spritzbrühe enthaltend ein wässriges Suspensionskonzentrat gemäß einem der Ansprüche 1 bis 3.

## Claims

1. Aqueous suspension concentrate comprising
- at least one insecticide,
- a nonionic and/or an ionic dispersant
- an aqueous polymer dispersion,
**characterized in that** the polymer dispersion is produced by polymerization in the presence of a hydrocolloid as graft base,
wherein the polymer dispersion is obtainable by free-radical-initiated emulsion copolymerization of ethylenically unsaturated monomers in the presence of starch, **characterized in that** as ethylenically unsaturated monomers, it employs
(a) 30% to 60% by weight of at least one optionally substituted styrene,
(b) 60% to 30% by weight of at least one C₁-C₄ alkyl ester (meth)acrylate,
(c) 0% to 10% by weight of other ethylenically unsaturated copolymerizable monomers,
as starch (d) 10% to 40% by weight of degraded starch having a molecular weight Mₙ = 500 to 10 000, where the sum (a) + (b) + (c) + (d) is 100%,
and as free-radical initiator for the free-radical-initiated emulsion polymerization a graft-linking, water-soluble redox system.

2. Aqueous suspension concentrate according to Claim 1, **characterized in that**, at a concentration of 0.025% by weight in demineralized water at a wavelength of 535 nm and an optical path of 1 cm, the polymer dispersion has an absorbance of less than 2.0.

3. Aqueous suspension concentrate according to either of Claims 1 or 2, wherein the polymer dispersion after drying has a glass transition temperature above 0°C.

4. Non-therapeutic use of an aqueous suspension concentrate according to any of Claims 1 or 3 for pest control.

5. Non-therapeutic use of an aqueous suspension concentrate according to Claim 4 through treatment of a surface with a coverage of 1.0 mg/m² to 2000 mg/m² polymer based on the solids content.

6. Aqueous suspension concentrate according to any of Claims 1 to 3 for use as medicaments for the control of ectoparasites in animals.

7. Spray mixture comprising an aqueous suspension concentrate according to any of Claims 1 to 3.

## Revendications

1. Concentré en suspension aqueuse contenant
- au moins un insecticide,
- un auxiliaire de dispersion non ionique et/ou un auxiliaire de dispersion ionique,
- une dispersion aqueuse de polymère,
**caractérisé en ce que** la dispersion de polymère est préparée par polymérisation en présence d'un hydrocolloïde en tant que base de greffage,
la dispersion de polymère pouvant être obtenue par copolymérisation en émulsion initiée de manière radicalaire de monomères éthyléniquement insaturés en présence d'amidon, **caractérisé en ce que** sont utilisés en tant que monomères éthyléniquement insaturés
(a) 30 à 60 % en poids d'au moins un styrène éventuellement substitué,
(b) 60 à 30 % en poids d'au moins un ester de C₁-C₄-alkyle d'acide (méth)acrylique,
(c) 0 à 10 % en poids d'autres monomères copolymérisables éthyléniquement insaturés,
en tant qu'amidon (d) 10 à 40 % en poids d'amidon dégradé doté d'un poids molaire Mₙ = 500 à 10 000, la somme (a) + (b) + (c) + (d) étant de 100 %,
et en tant qu'amorceur radicalaire, pour la polymérisation en émulsion initiée de manière radicalaire, un système rédox soluble dans l'eau, actif pour le greffage.

2. Concentré en suspension aqueuse selon la revendication 1, **caractérisé en ce que** la dispersion de polymère, en une concentration de 0,025 % en poids dans de l'eau déminéralisée à une longueur d'onde de 535 nm et un chemin optique de 1 cm, présente une extinction inférieure à 2,0.

3. Concentré en suspension aqueuse selon l'une quelconque des revendications 1 et 2, la dispersion de polymère présentant une température de transition vitreuse supérieure à 0 °C après séchage.

4. Utilisation non thérapeutique d'un concentré en suspension aqueuse selon l'une quelconque des revendications 1 à 3 pour la lutte contre des nuisibles.

5. Utilisation non thérapeutique d'un concentré en suspension aqueuse selon la revendication 4 par traitement d'une surface avec une application en surface de 1,0 mg/m² à 2 000 mg/m² de polymère par rapport à la teneur en solides.

6. Concentré en suspension aqueuse selon l'une quelconque des revendications 1 à 3 pour une utilisation en tant que médicaments pour la lutte contre des ectoparasites chez des animaux.

7. Bouillie pour pulvérisation contenant un concentré en suspension aqueuse selon l'une quelconque des revendications 1 à 3.
